# EUROPÄISCHE PATENTANMELDUNG

(11) **EP 4 726 303 A1**
(43) Veröffentlichungstag der Anmeldung: **15.04.2026**
(21) Anmeldenummer: 25192220.9
(22) Anmeldetag: 28.07.2025
(51) Int. Cl.: F25D 23/08

(54) **DICHTUNGSPROFIL**

(30) Priorität: 14.10.2024 DE 102024129690
(71) Anmelder: Binder GmbH, 78532 Tuttlingen (DE)
(72) Erfinder: Arabul, Ahmet, 78532 Tuttlingen (DE); Buschle, Jochen, 78532 Tuttlingen (DE); Storz, Ewald, 78604 Rietheim-Weilheim (DE); Zimmerer, Philipp, 78628 Rottweil (DE)
(74) Vertreter: Westphal, Mussgnug & Partner Patentanwälte mbB

(57) **Zusammenfassung**

Die Erfindung betrifft ein Dichtungsprofil (10) zur Abdichtung eines Spalts (130) zwischen einer Tür (120a) und einem Türanschlag (125), welches als Hohlprofil (11) mit einer Wandung (12), welche eine Innenseite (12a) und eine Außenseite (12b) aufweist und mit der Innenseite (12a) wenigstens einen Hohlraum (14) umschließt, ausgebildet ist, wobei das Hohlprofil (11) eine durch einen Abschnitt (13) der Außenseite (12b) gebildete Heizelementtasche (20) aufweist, in welcher ein Heizelement (30) mit einem Durchmesser (DH) angeordnet ist, wobei die Heizelementtasche (20) einen Heizelementraum (21) und einen Zugangskanal (22) aufweist, wobei in einem ersten Zustand des Dichtungsprofils (10) der Zugangskanal (22) im Querschnitt des Dichtungsprofils (10) eine Breite (BZ) aufweist, welche kleiner ist als der Durchmesser (DH) des Heizelements (30).

## Beschreibung

Die Erfindung betrifft ein Dichtungsprofil zur Abdichtung eines Spalts zwischen einer Tür und einem Türanschlag.

Klimaschränke sind aus dem Stand der Technik in unterschiedlichen Ausgestaltungen vorbekannt und werden in wissenschaftlichen Laboren oder im industriellen Einsatz zur Simulation von biologischen, chemischen und/oder physikalischen Umwelteinflüssen, wie beispielsweise Temperatur, Luftdruck und/oder Luftfeuchtigkeit verwendet. Ein Klimaschrank umfasst ein Gehäuse mit einem in dem Gehäuse angeordneten Innenraum, wobei in dem Innenraum die biologischen, chemischen und/oder physikalischen Umwelteinflüsse simuliert werden.

Bekannt sind Klimaschränke mit einem Gehäuse mit wenigstens einem eine Tür aufweisendes Grundkörper und einem Innenraum, der durch die wenigstens eine Tür verschließbar. Dabei soll die Tür gegen einen an dem Grundkörper angeordneten Türanschlag in einer geschlossenen Position möglichst abdichtend anliegen. Der Türanschlag kann dabei sowohl an einem feststehenden Teil des Grundkörpers, beispielsweise einem Türrahmen, als auch an einer weiteren Tür in dem Fall, dass der Klimaschrank eine Doppelflügeltür aufweist, angeordnet sein.

Die Türen der Klimaschränke ermöglichen nicht nur einen physischen Zugang zu dem Innenraum, sondern müssen ebenfalls als Wandung eine thermische Isolierung aufweisen, um den Innenraum von der Umgebung thermisch zu entkoppeln. Im Innern der Klimaschränke kann ein gewünschtes Klima eingestellt werden, insbesondere durch Regelung der Temperatur und/oder der Luftfeuchte. Typischerweise können Klimaschränke Temperaturen zwischen -10°C und 100° einstellen, jedoch gibt es ebenso Klimaschränke für den Hochtemperaturbereich, die dauerhaft Temperaturen von bis zu 350° im Innenraum einstellen können, oder auch Tiefkältegeräte, welche dauerhaft Temperaturen von bis zu -85° einstellen können. Die Türen müssen dabei einerseits eine ausreichende Isolation aufweisen und weiterhin den Spalt zwischen der Tür und dem Türanschlag dicht verschließen, sodass neben einem Wärmeaustausch mit der Umgebung auch ein Stoffaustausch unterbunden werden kann. Dazu ist es bekannt, an der Tür oder an dem Türanschlag eine Dichtung vorzusehen.

Aufgrund der hohen Temperaturdifferenzen besteht im Bereich der Dichtung jedoch die Gefahr von Schwitzwasserbildung und/oder Eisbildung.

Um diesen Missstand zu beseitigen ist es bekannt, die Dichtung zu beheizen. Beispielsweise offenbart die DE 951 573 A eine elastische Dichtung mit einem im Kern angeordneten Heizdraht. Nachteilig an einer derartigen Dichtung ist, dass sie vollständig ausgetauscht werden muss, wenn der Heizdraht beschädigt ist. Die DE 38 02 077 A1 offenbart eine elastische Dichtung zur Vermeidung von Schwitzwasserbildung an Randbereichen von Verglasungen, in welche ein Heizdraht in eine Nut der Dichtung eingelegt wird. Sofern der Heizdraht in der Nut jedoch nicht durch ein feststehendes Element abgedeckt oder in der Nut verklebt ist, besteht die Gefahr des Herausfallens des Heizdrahts.

Die Aufgabe der Erfindung besteht daher darin, ein Dichtungsprofil mit einem Heizelement bereitzustellen, welches einen Austausch des Heizelements ermöglicht.

Diese Aufgabe wird durch ein Dichtungsprofil mit den Merkmalen des Patentanspruchs 1 gelöst.

Vorteilhafte Ausgestaltungen und Weiterbildungen der Erfindung werden in den Unteransprüchen angegeben.

Das erfindungsgemäße Dichtungsprofil zur Abdichtung eines Spalts zwischen einer Tür und einem Türanschlag ist als Hohlprofil mit einer Wandung, welche eine Innenseite und eine Außenseite aufweist und mit der Innenseite wenigstens einen Hohlraum umschließt, ausgebildet, wobei das Hohlprofil eine durch einen Abschnitt der Außenseite gebildete Heizelementtasche aufweist, in welcher ein Heizelement mit einem Durchmesser angeordnet ist, wobei die Heizelementtasche einen Heizelementraum und einen Zugangskanal aufweist, wobei in einem ersten Zustand des Dichtungsprofils der Zugangskanal im Querschnitt des Dichtungsprofils eine Breite aufweist, welche kleiner ist als der Durchmesser des Heizelements. Dadurch, dass die Heizelementtasche durch einen Abschnitt der Außenseite des Hohlprofils gebildet wird, ist sie von außen zugänglich, wodurch eine Entnahme des Heizelements aus der Heizelementtasche und ein Einsetzen des Heizelements in die Heizelementtasche ermöglicht werden. Dadurch, dass der Zugangskanal in einem ersten Zustand des Dichtungsprofils im Querschnitt des Dichtungsprofils eine Breite aufweist, welche kleiner ist als der Durchmesser des Heizelements, ist das Heizelement jedoch verliersicher in dem Dichtungsprofil angeordnet. Als der erste Zustand des Dichtungsprofils kann insbesondere der unverformte Zustand des Dichtungsprofils oder mit anderen Worten der unbelastete Zustand des Dichtungsprofils angesehen werden. Das Dichtungsprofil ist jedoch derart verformbar, dass in einem verformten Zustand der Zugangskanal derart aufgeweitet ist, dass eine Entnahme des Heizelements aus der Heizelementtasche und ein Einsetzen des Heizelements in die Heizelementtasche möglich sind. Insbesondere ist dazu das Dichtungsprofil reversibel verformbar.

Gemäß einer besonders bevorzugten Ausführungsform der Erfindung ist das Dichtungsprofil aus einem elastisch verformbaren Material, vorzugsweise aus einem Kunststoff, besonders bevorzugt aus einem Silikon, gefertigt. Die Verwendung eines derartigen Materials begünstigt die elastischen Eigenschaften des Dichtungsprofils. Das Dichtungsprofil kann dabei vorzugsweise durch ein Extrusionsverfahren hergestellt sein.

Vorzugsweise ist an der Außenseite der Wandung des Hohlprofils in dem Zugangskanal wenigstens ein Vorsprung, vorzugsweise zwei Vorsprünge, angeordnet. Der Vorsprung oder die Vorsprünge verengen den Zugangskanal im Wesentlichen punktuell, so dass die Gefahr, dass ein Benutzer versehentlich das Heizelement berührt, verringert wird.

Eine bevorzugte Weiterbildung der Erfindung sieht vor, dass der Zugangskanal im Querschnitt des Dichtungsprofils einen gekrümmten oder abgewinkelten Verlauf aufweist. Die Gefahr, dass ein Benutzer versehentlich das Heizelement berührt, kann dadurch weiter verringert werden.

Vorteilhafterweise weist das Dichtungsprofil einen Befestigungsfuß und/oder eine Befestigungsnut auf. Eine derartige Ausgestaltung ermöglicht auf einfache Art und Weise eine Befestigung des Dichtungsprofils, beispielsweise indem der Befestigungsfuß in eine entsprechende Nut eingedrückt wird oder die Befestigungsnut über ein entsprechendes Befestigungsblech geschoben wird.

Vorzugsweise ist an der Außenseite der Wandung des Befestigungsfußes und/oder der Befestigungsnut wenigstens ein Haltemittel angeordnet ist, welches vorzugsweise als Haltelippe oder Halterippe ausgebildet ist. Derartige Haltemittel können den Reib- oder Kraftschluss erhöhen und die Befestigung des Dichtungsprofils verbessern.

Gemäß einer bevorzugten Ausgestaltung der Erfindung ist das Heizelement als Draht mit einer Silikonummantelung ausgebildet. Derartige Heizelemente lassen sich einfach und kostengünstig fertigen.

Vorzugsweise ist das Heizelement über einen Klemmanschluss mit einer externen elektrischen Energiequelle, vorzugsweise mit einer Niederspannungs-Gleichstromquelle, verbunden, wodurch auf einfache Art und Weise eine sichere Stromversorgung ermöglicht werden kann.

Ein erfindungsgemäßes Dichtungsprofil kommt vorzugsweise in einem Klimaschrank zur Anwendung, welcher eine zwischen einer geöffneten und einer geschlossenen Position verschwenkbaren Tür und einem Türanschlag, aufweist und wobei das Dichtungsprofil an der Tür oder dem Türanschlag, vorzugsweise an dem Türanschlag, angeordnet ist.

Das Dichtungsprofil weist vorzugsweise einen Befestigungsfuß auf, welcher in eine Nut des Klimaschranks, welche beispielsweise an der Tür oder dem Türanschlag, vorzugsweise an dem Türanschlag, angeordnet ist, eingesetzt ist, wobei das Heizelement und vorzugsweise der Zugangskanal in einem über die Nut überstehenden Teil des Dichtungsprofils angeordnet ist. Eine derartige Anordnung erleichtert die Zugänglichkeit des Heizelements. Insbesondere ermöglicht eine derartige Ausgestaltung ein Auswechseln eines beschädigten Heizelements ohne die Dichtung vom Klimaschrank entfernen zu müssen.

Ein Ausführungsbeispiel der Erfindung wird anhand der nachfolgenden Figuren ausführlich erläutert. Es zeigen
- Fig. 1: einen Querschnitt eines Ausführungsbeispiels eines erfindungsgemäßen Dichtungsprofils im unverformten Zustand,
- Fig. 2: den Querschnitt des Dichtungsprofils gemäß Fig. 1 mit eingesetztem Heizelement,
- Fig. 3: einen weiteren Querschnitt des Dichtungsprofils gemäß Fig. 1 auf Höhe eines Zuführkanals,
- Fig. 4: eine teilweise geschnittene perspektivische Ansicht des umlaufenden Dichtungsprofils gemäß Fig. 1,
- Fig. 5: die Ansicht des Dichtungsprofils gemäß Fig. 4 mit eingesetztem Heizelement,
- Fig. 6: eine perspektivische Ansicht eines Ausführungsbeispiels eines Klimaschranks mit einem Grundkörper und zwei Türen in einer geöffneten Position, wobei an dem Grundkörper ein Dichtungsprofil gemäß Fig. 1 angeordnet ist,
- Fig. 7: eine perspektivische Ansicht auf den Klimaschrank gemäß Fig. 6 mit den Türen in einer geschlossenen Position,
- Fig. 8: eine Ansicht von oben auf den Klimaschrank gemäß Fig. 7,
- Fig. 9: eine Ausschnittvergrößerung eines Querschnitts durch den Klimaschrank gemäß Fig. 8, wobei das Dichtungsprofil trotz geschlossener Tür im unbelasteten Zustand dargestellt ist, und
- Fig. 10: die Ansicht gemäß Fig. 9 mit herausgenommenem Heizelement.

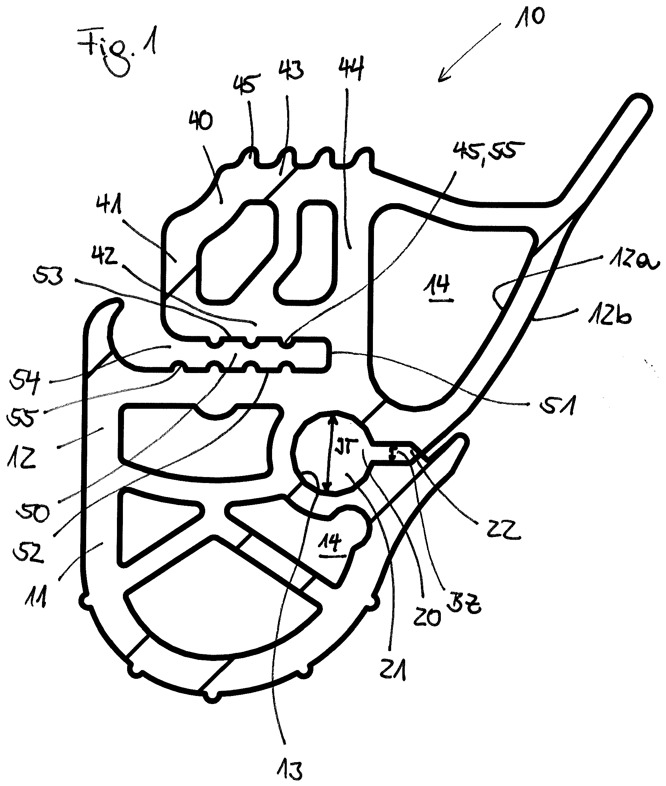

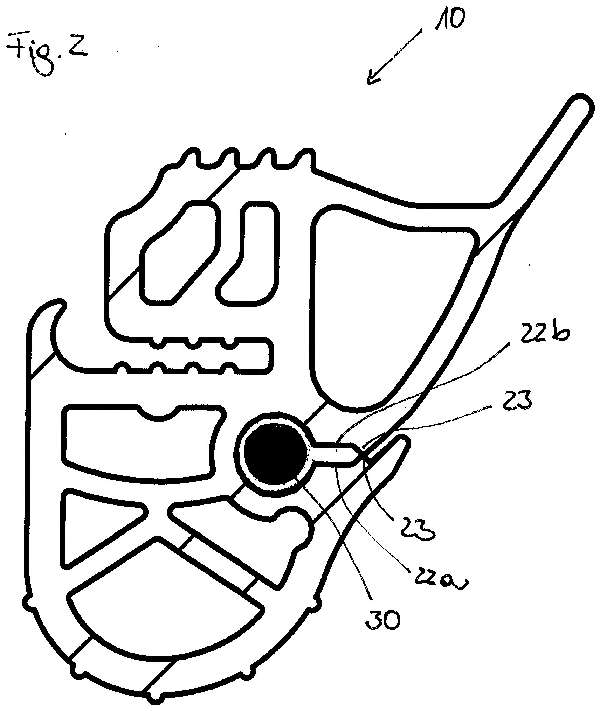

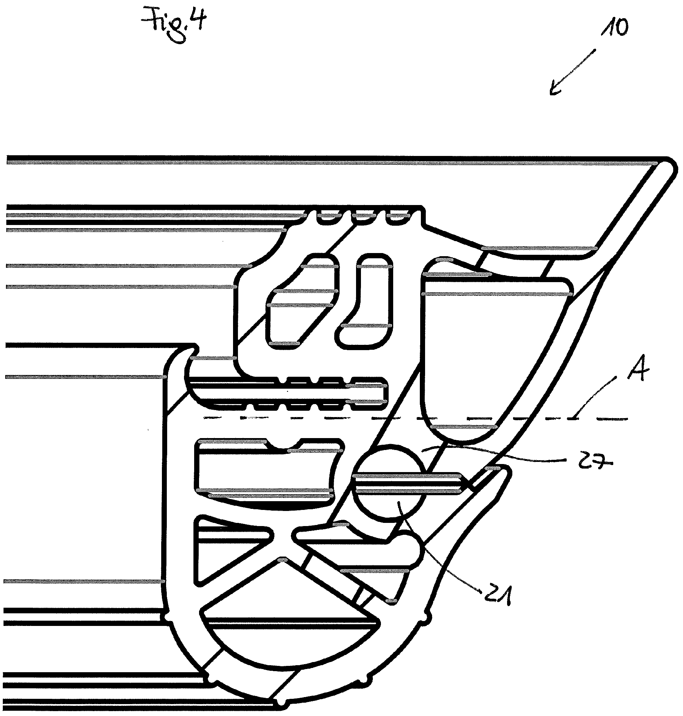

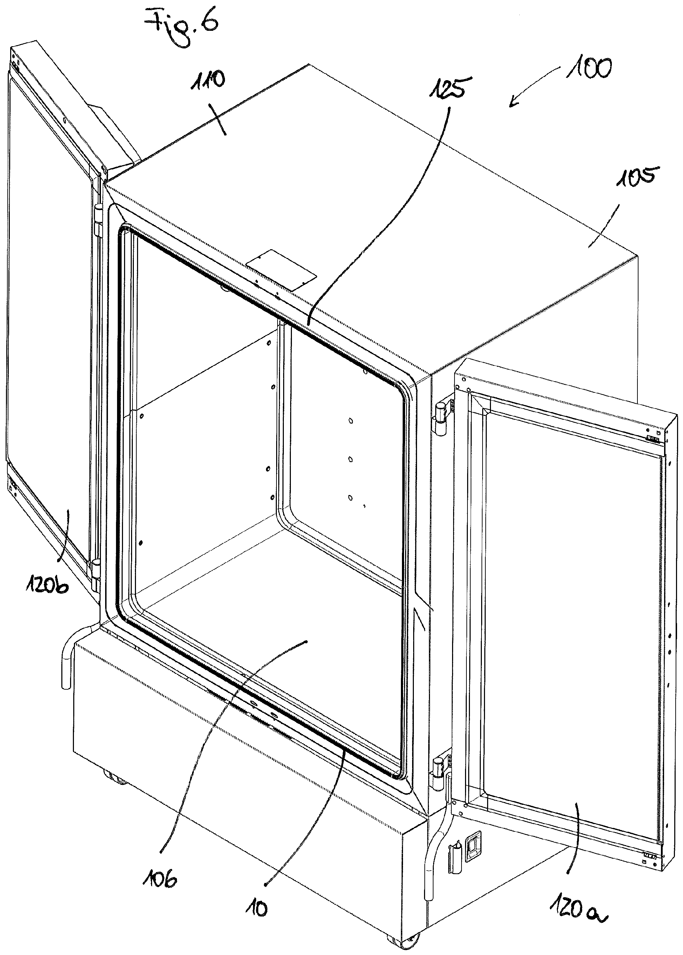

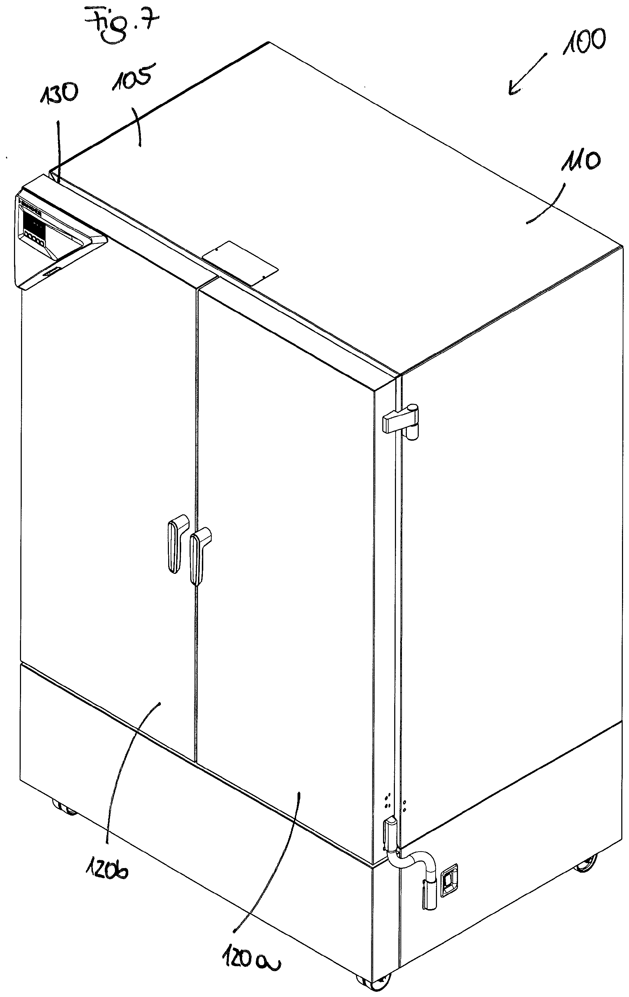

Die Figuren 1 bis 5 zeigen Ansichten eines Ausführungsbeispiels eines erfindungsgemäßen Dichtungsprofils 10, die Figuren 6 bis 10 illustrieren den Einbau eines derartigen Dichtungsprofils 10 in einen Klimaschrank 100. Gleiche oder funktionsgleiche Teile werden mit gleichen Bezugszeichen gekennzeichnet, wobei der Übersichtlichkeit halber nicht sämtliche Bezugsziffern in sämtlichen Figuren angegeben sind.

Das Dichtungsprofil 10 ist als Hohlprofil 11 mit einer Wandung 12, welche eine Innenseite 12a und eine Außenseite 12b aufweist ausgebildet. Mit der Innenseite 12a wird wenigstens ein Hohlraum 14 umschlossen. Das Dichtungsprofil 10 kann aus einem elastisch verformbaren Material, beispielsweise einem Kunststoff, insbesondere einem Silikon, gefertigt sein und beispielsweise durch ein Extrusionsverfahren hergestellt werden. Das Dichtungsprofil 10 weist eine Längsachse A auf, welche senkrecht zu dem in Figur 1 dargestellten Querschnitt verläuft.

Das Hohlprofil 11 weist eine durch einen Abschnitt 13 der Außenseite 12b gebildete Heizelementtasche 20 auf, in welcher ein Heizelement 30 angeordnet ist. Das Heizelement 30 weist eine Längsachse LH und einen Außendurchmesser DH auf und kann beispielsweise als Draht mit einer Silikonummantelung ausgebildet sein.

Die Heizelementtasche 20 ist insbesondere parallel zur Längsachse A des Dichtungsprofils 10 verlaufend angeordnet. Ist das Heizelement 30 in der Heizelementtasche 20 angeordnet, verläuft auch die Längsachse LH des Heizelements 30 im Wesentlichen parallel zur Längsachse A des Dichtungsprofils 10.

Die Heizelementtasche 20 weist einen Heizelementraum 21 und einen Zugangskanal 22 auf. Der Heizelementraum 21 kann im Querschnitt beispielsweise etwa rund ausgebildet sein und einen Innendurchmesser IT aufweisen, welcher geringfügig größer ist als der Außendurchmesser DH des Heizelements 30, so dass das Heizelement 30 im wesentlichen formschlüssig in der Heizelementtasche angeordnet werden kann. In einem ersten Zustand des Dichtungsprofils 30, welcher insbesondere ein unverformter Zustand des Dichtungsprofils 30 ist, weist der Zugangskanal 22 im Querschnitt des Dichtungsprofils 30 eine Breite BZ aufweist, welche kleiner ist als der Durchmesser DH des Heizelements 30 und damit insbesondere auch kleiner ist als der Innendurchmesser IT des Heizelementraums 21. Die Heizelementtasche 20 kann damit insbesondere einen Querschnitt nach Art eines Schlüssellochs aufweisen. Das Heizelement 30 kann dadurch verliersicher und geschützt in dem Heizelementraum 21 angeordnet werden.

An der Außenseite 12b der Wandung 12 des Hohlprofils 11 kann in dem Zugangskanal 22 wenigstens ein Vorsprung 23 angeordnet sein. Bei dem dargestellten Ausführungsbeispiel sind an der Außenseite 12b der Wandung 12 des Hohlprofils 11 in dem Zugangskanal 22 zwei Vorsprünge 23 angeordnet, beispielsweise derart, dass sie an gegenüberliegenden Seitenflächen 22a, 22b des Zugangskanals 22 angeordnet sind und derart in den Zugangskanal 22 hineinragen, dass sie sich im unverformten Zustand des Dichtungsprofils 30 berühren. Diese verengen den Zugangskanal 22 oder verschließen ihn vorzugsweise. Das Heizelement 30 kann dadurch gegen Verunreinigungen geschützt in dem Heizelementraum 21 angeordnet werden.

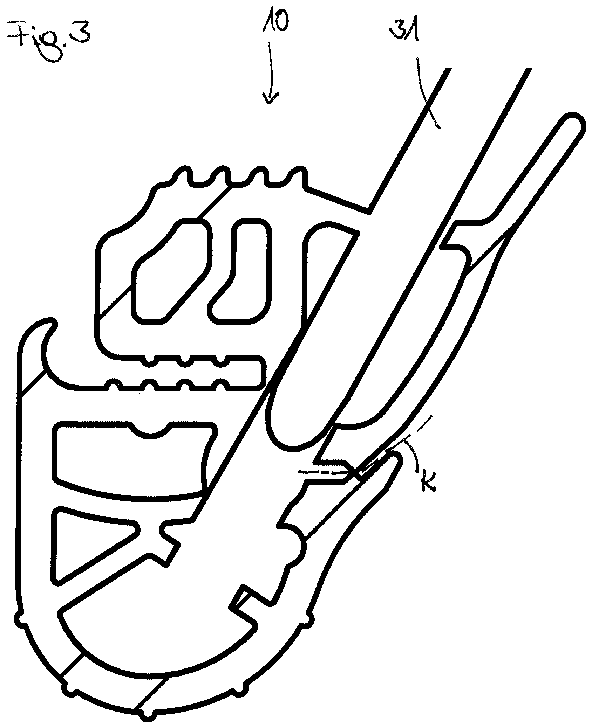

Der Zugangskanal 22 kann im Querschnitt des Dichtungsprofils 10 einen gekrümmten oder abgewinkelten Verlauf K aufweisen. Der gekrümmte oder abgewinkelte Verlauf K ist in Fig. 3 mit der mit K bezeichneten gestrichelten Linie illustriert.

Dadurch, dass die Heizelementtasche 20 durch den Abschnitt 13 der Außenseite 12b der Wandung gebildet wird, ist die Heizelementtasche 20 nach außen offen. Im Querschnitt radial angrenzend an die Heizelementtasche 20 ist der wenigstens eine Hohlraum 14 angeordnet. Insbesondere weist das Dichtungsprofil 10 wenigstens zwei Hohlräume 14 auf, wobei im Querschnitt des Dichtungsprofils 10 in Richtung quer zum Zugangskanal 22 auf jeder Seite des Zugangskanals 22 einer der beiden Hohlräume 14 angeordnet ist.

Um das Heizelement 30 in den Heizelementraum 21 einbringen oder aus diesem entnehmen zu können, kann das Dichtungsprofil 10 derart verformt werden, dass der Zugangskanal 22 aufgeweitet wird, insbesondere, indem die beiden gegenüberliegenden Seitenflächen 22a, 22b des Zugangskanals 22 voneinander weg gebogen werden. Dies kann insbesondere durch die in dem Dichtungsprofil 10 angeordneten Hohlräume 14 ermöglicht werden.

Das Dichtungsprofil 10 kann einen Befestigungsfuß 40 und/oder eine Befestigungsnut 50 aufweisen. Das dargestellte Dichtungsprofil 10 weist sowohl den Befestigungsfuß 40 als auch die Befestigungsnut 50 auf.

Der Befestigungsfuß 40 kann im Querschnitt des Dichtungsprofils 10 etwa rechteckig mit einer Grundseite 41, zwei sich gegenüberliegenden Seitenflächen 42, 43 und einer Oberseite 44 ausgebildet sein. Die Oberseite 44 kann näherungsweise in radialer Richtung zur den Heizelementraum 21 begrenzenden Teil des Abschnitts 13 der Wandung 12 angeordnet sein. Die beiden Seitenflächen 42, 43 verlaufen im Wesentlichen senkrecht zur Oberseite 44, während die Grundseite 41 die beiden von der Oberseite 44 weg weisenden Enden der Seitenflächen 42, 43 verbindet. Die Grundseite 41 und die beiden Seitenflächen 42, 43 können dabei Teil der Außenseite 12b der Wandung des Hohlprofils 11 sein. Die Oberseite 44 kann zumindest abschnittsweise als innenliegender Steg an dem Befestigungsfuß 40 und einer der Hohlkammern 14 angeordnet sein. An der Außenseite 12b der Wandung 12 des Befestigungsfußes 40, insbesondere an den Seitenflächen 43, 43, kann wenigstens ein Haltemittel 45, vorliegend mehrere Haltemittel 45, welche beispielsweise als Haltelippen oder Halterippen ausgebildet sein können, angeordnet sein.

Die Befestigungsnut 50 kann im Querschnitt des Dichtungsprofils 10 etwa rechteckig mit einer Bodenfläche 51, zwei sich gegenüberliegenden Seitenwandungen 52, 53 und einer der Bodenfläche 51 gegenüberliegenden Öffnung 54 ausgebildet sein. Die Bodenfläche 51 kann näherungsweise in radialer Richtung zur den Heizelementraum 21 begrenzenden Teil des Abschnitts 13 der Wandung 12 angeordnet sein und beispielsweise durch einen Abschnitt der Oberseite 44 des Befestigungsfußes ausgebildet sein. Die beiden Seitenwandungen 52, 53 verlaufen im Wesentlichen senkrecht zur Bodenfläche 51. Die Bodenfläche 51 und die beiden Seitenwandungen 42, 43 können dabei Teil der Außenseite 12b der Wandung des Hohlprofils 11 sein. Die Befestigungsnut 50 ist damit nach außen offen. Insbesondere ist im vorliegenden Ausführungsbeispiel die Seitenwandung 53 der Befestigungsnut 50 durch die Seitenfläche 42 des Befestigungsfußes 40 gebildet. An der Außenseite 12b der Wandung 12 der Befestigungsnut 50, insbesondere an den Seitenwandungen 52, 53, kann wenigstens ein Haltemittel 55, vorliegend mehrere Haltemittel 55, welche beispielsweise als Haltelippen oder Halterippen ausgebildet sein können, angeordnet sein. Im vorliegenden Ausführungsbeispiel werden dabei teilweise die Haltemittel 55 der Befestigungsnut 50 durch die Haltemittel 45 des Befestigungsfußes gebildet.

Der in den Figuren 6 bis 10 dargestellte Klimaschrank 100 weist ein Gehäuse 105 mit einem Grundkörper 110 und wenigstens einer zwischen einer geöffneten und einer geschlossenen Position verschwenkbaren Tür 120a, vorliegend zwei jeweils zwischen einer geöffneten und einer geschlossenen Position verschwenkbaren Türen 120a, 120b, auf, wobei das Gehäuse 105 einen Innenraum 106 umschließt. Der Klimaschrank 100 umfasst ferner einen Türanschlag 125 für die Tür 120a. Wenn nur genau eine Tür 120a vorhanden ist, kann der Türanschlag 125 vollständig an dem Grundkörper 110 angeordnet sein. Wenn, wie im vorliegenden Ausführungsbeispiel dargestellt, der Klimaschrank 100 zwei Türen 120a, 120b aufweist, kann der Türanschlag 125 für die Tür 120a zumindest für die freie Stirnkante der Tür 120a an der anderen Tür 120b angeordnet sein. Der Türanschlag 125 für die Oberkante und Unterkante der Tür 120a kann an dem Grundkörper 110 angeordnet sein. Vorliegend ist der Türanschlag 125 umlaufend um die durch die Türen 120a, 120b verschließbare Seitenwand des Grundkörpers 110 angeordnet. Der zwischen den Stirnkanten der Türen 120a, 120b angeordnete Türanschlag ist im vorliegenden Ausführungsbeispiel nicht weiter relevant.

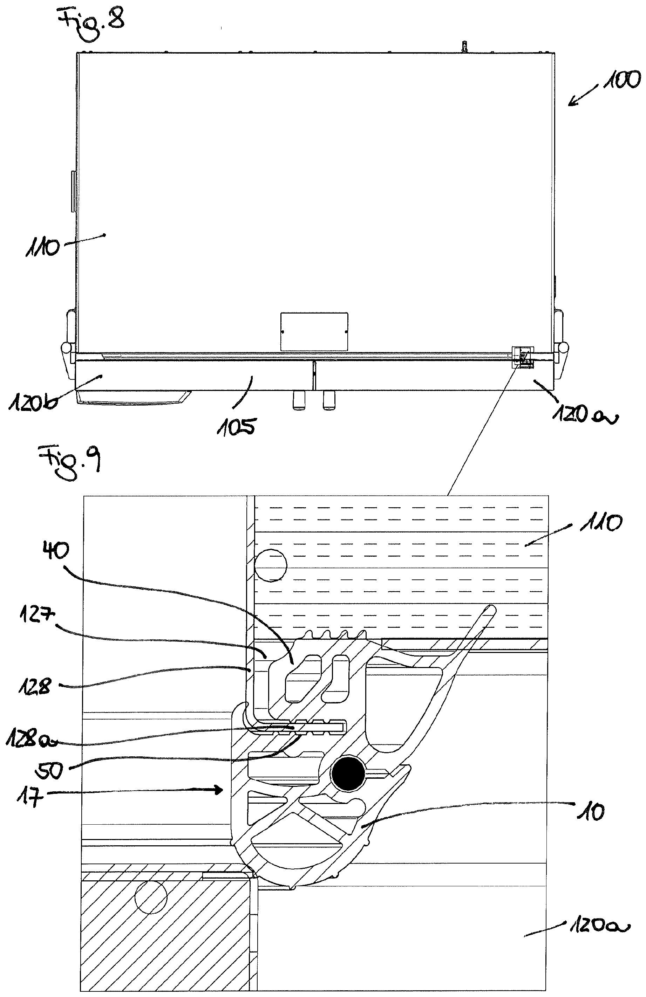

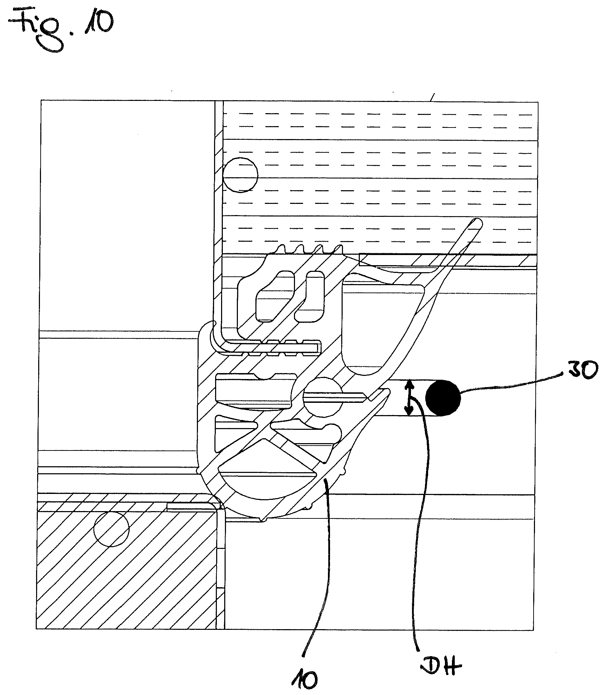

Das Dichtungsprofil 10 ist zur Abdichtung eines Spalts 130 zwischen den Türen 120a, 120b einerseits und dem Türanschlag 125 andererseits ausgebildet. Dazu kann das Dichtungsprofil 10 an dem Grundkörper 110, insbesondere in einer Nut 127, welche beispielsweise an der zu den Türen 120a, 120b weisenden Stirnseite des Grundkörpers 110 angeordnet sein kann, angeordnet sein. Das Dichtungsprofil 10 ist dabei insbesondere umlaufend ausgebildet. Die Nut 127 kann dabei insbesondere durch ein L-förmig abgewinkeltes Blech 128, welches mit einem freien Schenkel 128a beabstandet zum Grundkörper 110 angeordnet ist, begrenzt sein. Das Dichtungsprofil 10 kann mit dem Befestigungsfuß 40 in die Nut 127 eingesetzt werden (vgl. Fig. 9 und 10). Gleichzeit kann der freie Schenkel 128a des die Nut 127 abschnittsweise begrenzenden Blechs 128 in die Befestigungsnut 50 eingreifen (vgl. Fig. 9 und 10). Die Haltemittel 45, 55 können dabei für einen ausreichenden Halt sorgen. Die Verformung der Haltemittel 45, 55 ist dabei in den Figuren 9 und 10 nicht dargestellt.

Ist das Dichtungsprofil 10 mit dem Befestigungsfuß 40 in die Nut 127 eingesetzt, steht ein Teil 17 des Dichtungsprofils 10 über die Nut 127 über. Das Heizelement 20 und vorzugsweise der Zugangskanal 22 der Heizelementtasche 10 sind insbesondere in diesem über die Nut 127 überstehenden Teil 17 des Dichtungsprofils 10 angeordnet. Dies ermöglicht es, den das Heizelement 20 wie in Fig. 10 dargestellt, aus dem Dichtungsprofil 10 zu entfernen, auch wenn das Dichtungsprofil 10 an dem Klimaschrank 100 angeordnet ist, insbesondere in die Nut 127 eingesetzt ist, da der überstehende Teil 17 entsprechend verformt werden kann, um den Zugangskanal 22 zu öffnen und das Heizelement 20 zu entnehmen. Ist das Heizelement 20 defekt, kann werkzeuglos ohne großen Aufwand ein Austausch erfolgen.

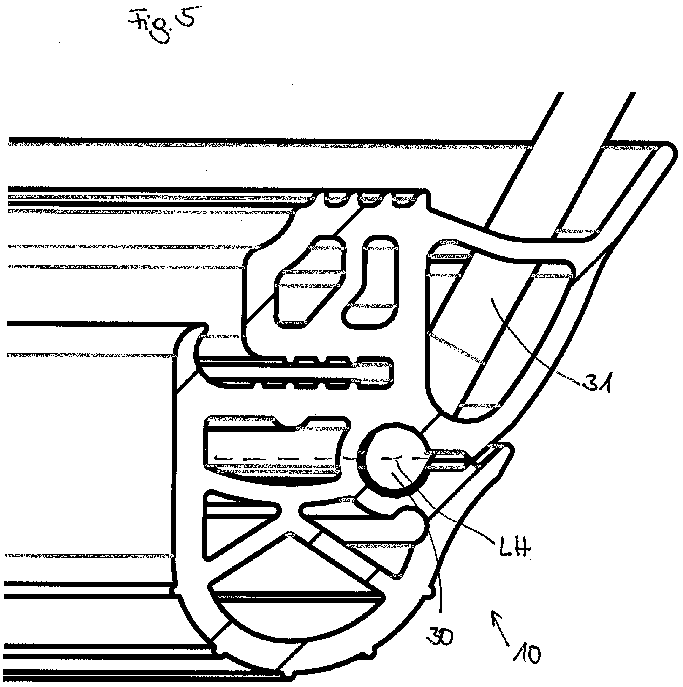

Das Heizelement 30 kann über einen Klemmanschluss mit einer externen elektrischen Energiequelle, vorzugsweise mit einer Niederspannungs-Gleichstromquelle, verbunden sein. Dazu ist das Heizelement 30 insbesondere mit einem Zuführabschnitt 31 in einem Zuführkanal 27 des Dichtungsprofils 10 angeordnet, welcher insbesondere quer zur Längsachse A des Dichtungsprofils 10 und damit zur Längsachse der Heizdrahttasche 20 in dem Dichtungsprofil 10 angeordnet ist (vgl. insbesondere Fig. 3 und 5). Dies ermöglicht es, die elektrische Energiequelle für das Heizelement 30 außerhalb des Dichtungsbereichs zwischen den Türen 120a, 120b und dem Türanschlag 125, beispielsweise in einer Seitenwand des Grundkörpers 110 des Klimaschranks 100, anordnen zu können.

Im Falle eines Defekts des Heizelements kann zum Austausch des Heizelements 30 der Klemmanschluss insbesondere ebenfalls werkzeuglos gelöst, das in dem Dichtungsprofil 10 umlaufende Heizelement 30 durch Verformen des Dichtungsprofils 10 entnommen und ein neues Heizelement in die Heizelementtasche 20 des Dichtungsprofils 10 eingelegt und anschließend wieder mit der Energiequelle verbunden werden, insbesondere ohne dass Spezialwerkzeug erforderlich wäre und insbesondere ohne dass ein Austausch des vollständigen Dichtungsprofils 10 erforderlich wäre.

### Bezugszeichenliste

- 10: Dichtungsprofil
- 11: Hohlprofil
- 12: Wandung
- 12a: Innenseite
- 12b: Außenseite
- 13: Abschnitt
- 14: Hohlraum
- 17: Teil
- 20: Heizelementtasche
- 21: Heizelementraum
- 22: Zugangskanal
- 22a: Seitenfläche
- 22b: Seitenfläche
- 23: Vorsprung
- 27: Zuführkanal
- 30: Heizelement
- 31: Zuführabschnitt
- 40: Befestigungsfuß
- 41: Grundseite
- 42: Seitenfläche
- 43: Seitenfläche
- 44: Oberseite
- 45: Haltemittel
- 50: Befestigungsnut
- 51: Bodenfläche
- 52: Seitenwandung
- 53: Seitenwandung
- 54: Öffnung
- 55: Haltemittel
- 100: Klimaschrank
- 105: Gehäuse
- 106: Innenraum
- 110: Grundkörper
- 120a: Tür
- 120b: Tür
- 125: Türanschlag
- 127: Nut
- 128: Blech
- 128a: Schenkel
- 130: Spalt
- A: Längsachse des Dichtungsprofils
- IT: Innendurchmesser des Heizelementraums
- BZ: Breite des Zugangskanals
- DH: Außendurchmesser des Heizelements
- LH: Längsachse des Heizelements
- K: Verlauf

## Patentansprüche

1. Dichtungsprofil (10) zur Abdichtung eines Spalts (130) zwischen einer Tür (120a) und einem Türanschlag (125), welches als Hohlprofil (11) mit einer Wandung (12), welche eine Innenseite (12a) und eine Außenseite (12b) aufweist und mit der Innenseite (12a) wenigstens einen Hohlraum (14) umschließt, ausgebildet ist, wobei das Hohlprofil (11) eine durch einen Abschnitt (13) der Außenseite (12b) gebildete Heizelementtasche (20) aufweist, in welcher ein Heizelement (30) mit einem Durchmesser (DH) angeordnet ist, wobei die Heizelementtasche (20) einen Heizelementraum (21) und einen Zugangskanal (22) aufweist, wobei in einem ersten Zustand des Dichtungsprofils (10) der Zugangskanal (22) im Querschnitt des Dichtungsprofils (10) eine Breite (BZ) aufweist, welche kleiner ist als der Durchmesser (DH) des Heizelements (30).

2. Dichtungsprofil nach Anspruch 1,
**dadurch gekennzeichnet, dass** das Dichtungsprofil (10) aus einem elastisch verformbaren Material, vorzugsweise aus einem Kunststoff, besonders bevorzugt aus einem Silikon, gefertigt ist.

3. Dichtungsprofil nach einem der vorhergehenden Ansprüche,
**dadurch gekennzeichnet, dass** an der Außenseite (12b) der Wandung (12) des Hohlprofils (11) in dem Zugangskanal (229 wenigstens ein Vorsprung (23) angeordnet ist, vorzugsweise zwei Vorsprünge (23) angeordnet sind.

4. Dichtungsprofil nach einem der vorhergehenden Ansprüche,
**dadurch gekennzeichnet, dass** der Zugangskanal (22) im Querschnitt des Dichtungsprofils (10) einen gekrümmten oder abgewinkelten Verlauf (K) aufweist.

5. Dichtungsprofil nach einem der vorhergehenden Ansprüche,
**dadurch gekennzeichnet, dass** das Dichtungsprofil (10) einen Befestigungsfuß (40) und/oder eine Befestigungsnut (50) aufweist.

6. Dichtungsprofil nach einem der vorhergehenden Ansprüche,
**dadurch gekennzeichnet, dass** an der Außenseite (12b) der Wandung (12) des Befestigungsfußes (50) und/oder der Befestigungsnut (50), wenigstens ein Haltemittel (45, 55) angeordnet ist, welches vorzugsweise als Haltelippe oder Halterippe ausgebildet ist.

7. Dichtungsprofil nach einem der vorhergehenden Ansprüche,
**dadurch gekennzeichnet, dass** das Heizelement (30) als Draht mit einer Silikonummantelung ausgebildet ist.

8. Dichtungsprofil nach einem der vorhergehenden Ansprüche,
**dadurch gekennzeichnet, dass** das Heizelement (30) über einen Klemmanschluss mit einer externen elektrischen Energiequelle, vorzugsweise mit einer Niederspannungs-Gleichstromquelle, verbunden ist.

9. Klimaschrank (100) mit einer zwischen einer geöffneten und einer geschlossenen Position verschwenkbaren Tür (120a) und einem Türanschlag (125), wobei an der Tür (120a) oder dem Türanschlag (125) ein Dichtungsprofil (10) nach einem der vorhergehenden Ansprüche angeordnet ist.

10. Klimaschrank nach einem der vorhergehenden Ansprüche, **dadurch gekennzeichnet, dass** das Dichtungsprofil (10) mit seinem Befestigungsfuß (40) in eine Nut (127) des Klimaschranks (100) eingesetzt ist, wobei das Heizelement (30) und vorzugsweise der Zugangskanal (22) in einem über die Nut (127) überstehenden Teil (17) des Dichtungsprofils (10) angeordnet ist.
